# EUROPEAN PATENT APPLICATION

(11) **EP 4 530 130 A1**
(43) Date of publication of application: **02.04.2025**
(21) Application number: 23200323.6
(22) Date of filing: 28.09.2023
(51) Int. Cl.: B60R 11/04

(54) **CAMERA MODULE AND VEHICLE**

(71) Applicant: ZF CV Systems Global GmbH, 3006 Bern (CH)
(72) Inventor: STASIAK, Krystian, 52-013 Wroclaw (PL); KOWALCZYK, Sebastian, 52-234 Wroclaw (PL); WOLANSKI, Michal, 54-129 Wroclaw (PL)
(74) Representative: Schäferjohann, Volker

(57) **Abstract**

The invention relates to a camera module (10) for being mounted on a window (12) and comprising: at least a first camera (14) comprising a lens axis (16), a first element (18) for being fixed to the window (12) and defining a mounting plane (20) between the first element (18) and the window (12) in a fixed condition, a fixing element (22) for fixing the first element (18) to the window (12), a second element (28), wherein the first camera (14) is fixed to the second element (28), characterized in that the second element (28) is movable relative to the first element (18) such that an angle (30) between the lens axis (16) and the mounting plane (20) is adjustable.

## Description

The invention relates to a camera module for being mounted on a window and comprising: at least a first camera comprising a lens axis, a first element for being fixed to the window and defining a mounting plane between the first element and the window in a fixed condition, a fixing element for fixing the first element to the window, and a second element, wherein the first camera is fixed to the second element.

The invention also relates to a vehicle comprising a window and a camera module as mentioned above.

Modern vehicles comprise several driver assistance systems or autonomous driving systems. Such systems utilize cameras for detecting objects in the vicinity of the vehicle.

It has proven particularly advantageous to mount such cameras on a window of the vehicle in a manner such that the camera is facing outwardly but is mounted on the inside of the window. An advantage of this approach is that the camera is well protected. Another advantage is that the vehicle typically comprises a cleaning system for the window, especially for the windshield. Thus, the cleaning system also can function as a cleaning system for the camera.

Camera modules for mounting on a window of the prior art have been designed in part or in full individually for certain kinds of vehicles and windshields, because the angle of the windshield is typically different in different vehicles.

A universal bracket is disclosed in US 2004/0119881 A1 that allows 180 degree of pitch adjustment for a camera. The camera has two brackets that can adapt to various mounting angles on any vehicle surface configuration. However, this bracket is not suitable for mounting a camera on a window.

It is an object of the invention, to provide a simple camera module design for mounting on a window that is suitable for different vehicles.

This object is achieved by a camera module according to claim 1 and, in particular, by the second element being movable relative to the first element such that an angle between the lens axis and the mounting plane is adjustable.

Such a camera module is simple and cost-efficient to produce while being versatile in use for various kinds of vehicles.

The angle between the lens axis and the mounting plane may preferably be adjustable in a range smaller than 50°, more preferably smaller than 30°. This is particularly efficient as this range has proven to be sufficient for most vehicles.

The angle may preferably be adjustable down to a lower limit, wherein the lower limit is above 30°, preferably above 60°, preferably essentially 70°. This is particularly efficient as this has proven to be sufficient for most vehicles.

The angle may preferably be adjustable up to an upper limit, wherein the upper limit is below 120°, preferably below 100°, preferably essentially 90°. This is particularly efficient as this has proven to be sufficient for most vehicles.

According to an embodiment, the camera module comprises a fastening element for fastening the second element relative to the first element. This provides for simple means for fastening the second element such that a desired angle between the lens axis of the first camera and the mounting plane can easily be fixed.

According to an embodiment, the fastening element is a screw. This embodiment is particularly simple.

According to an embodiment, the camera module comprises a hinge defining a movement of the second element relative to the first element. This embodiment is particularly simple while securely defining an articulation of the second element relative to the first element.

According to an embodiment, the hinge comprises a shaft and a hub, wherein the shaft is held by the hub by means of a snap-fit connection and/or a form-fit connection. Preferably, at least the hub is made from plastic. Such a hinge is particularly simple to manufacture and particularly simple to assemble.

The first element, the second element and/or the hinge may preferably be made from plastic. Not only can such a camera module be produced highly economically but also with plastic it is possible to easily design the elements such that a small total number of elements is necessary. This simplifies assembly.

According to a particularly simple embodiment, the fixing element is an adhesive element. Preferably the adhesive element may be an adhesive tape.

According to an embodiment, the camera module comprises a second camera fixed to the second element. Since the camera module of the invention is particularly well suitable for use in a vehicle and for use with a driver assistance system, a second camera can enhance object recognition of the driver assistance system and thus improve security. With a second camera also fixed to the second element it is ensured in a simple matter that the respective lens axes of the first camera and the second camera are adjustable in unison.

The first camera may preferably be a normal lens camera. The second camera may preferably be a wide lens camera.

The invention also relates to a vehicle comprising a window and a camera module mounted on the window, wherein the camera module is configured in accordance with an embodiment described above.

The vehicle may be a commercial vehicle, a truck, a truck-trailer-combination, an omnibus, or a rail vehicle or a passenger car.

The invention will hereinafter be described with reference to exemplary embodiments shown in the schematic drawings.
Fig. 1 shows a camera module.
Fig. 2 shows the camera module of Fig. 1 mounted on a window.
Fig. 3 shows a detail of the camera module of Fig. 1.
Fig. 4 shows a detail of the camera module of Fig. 1.
Fig. 5 shows a vehicle comprising a camera module mounted on a window.

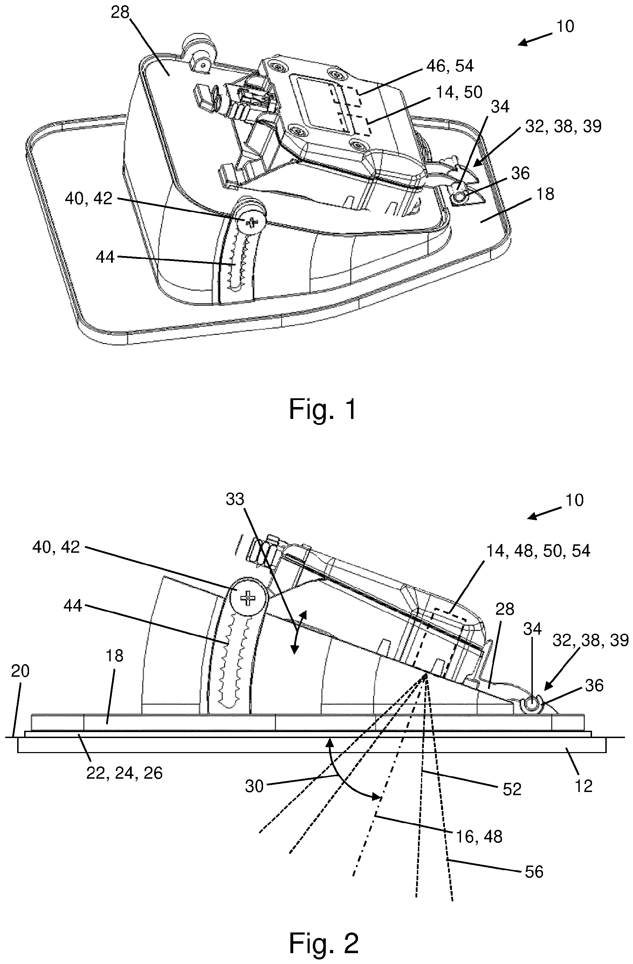

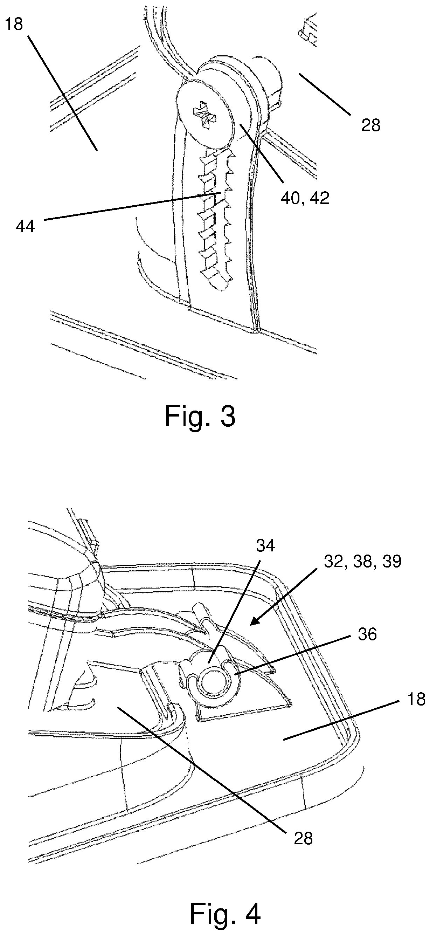

In the following, Figs. 1 to 4 are described together, unless more specific reference is made. Some reference signs may be omitted in some of the figures for the purpose of clarity.

Figs. 1 to 4 show a camera module 10 for being mounted on a window 12 (see Fig. 2) and comprising: at least a first camera 14 comprising a lens axis 16, a first element 18 for being fixed to the window 12 and defining a mounting plane 20 between the first element 18 and the window 12 in a fixed condition, i.e. the condition shown in Fig. 2.

The camera module 10 comprises a fixing element 22 for fixing the first element 18 to the window 12. The fixing element 22 is an adhesive element 24, preferably an adhesive tape 26.

The camera module 10 comprises a second element 28, wherein the first camera 14 is fixed to the second element 28. The second element 28 is movable relative to the first element 18 such that an angle 30 between the lens axis 16 of the first camera 14 and the mounting plane 20 is adjustable.

The camera module 10 comprises a hinge 32 defining a movement 33 of the second element 28 relative to the first element 18. The hinge 32 comprises a shaft 34 and a hub 36. The shaft 34 is held by the hub 36 by means of a snap-fit connection 38 and a form-fit connection 39. The first element 18, the second element 28 and the hinge 32 are made from plastic. The shaft 34 is part of the first element 18. The hub 36 is part of the second element 28.

The camera module 10 comprises a fastening element 40 for fastening the second element 28 relative to the first element 18. The fastening element 40 is a screw 42. The screw 42 is moveable in an oblong hole 44 of the first element 18 and can be fastened in a desired position along the oblong hole 44 in order to fasten the second element 28 and, thus, the camera 14, at a desired angle 30.

In this embodiment, the angle 30 between the lens axis 16 and the mounting plane 20 is adjustable in a range of 20°. The angle 30 between the lens axis 16 and the mounting plane 20 is adjustable down to a lower limit of 70°. The angle 30 between the lens axis 16 and the mounting plane 20 is adjustable up to an upper limit of 90°.

The camera module 10 comprises a second camera 46 fixed to the second element 28. The second camera comprises a lens axis 48, that is parallel to the lens axis 16 of the first camera 14. Thus, the lens axes of the first camera 14 and the second camera 48 can be adjusted together.

The first camera 14 is a normal lens camera 50 having a first field of view 52. The second camera 46 is a wide lens camera 54 having a second field of view 56 that is wider than the first field of view 52.

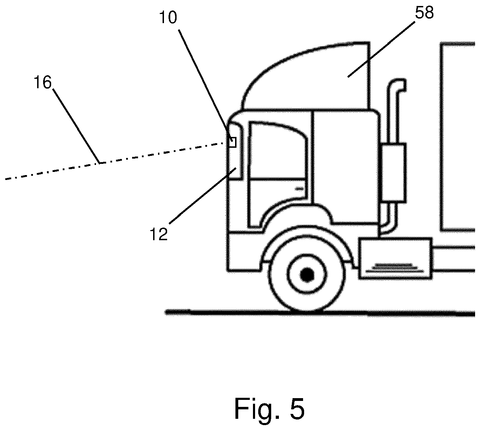

Fig. 5 shows a vehicle 58 comprising a window 12 and a camera module 10 having a lens axis 16. The camera module 10 is mounted on the window 12. The camera module 10 may be configured as the camera module 10 shown in Figs. 1 to 4.

### List of references (part of the description)

- 10: camera module
- 12: window
- 14: first camera
- 16: lens axis
- 18: first element
- 20: mounting plane
- 22: fixing element
- 24: adhesive element
- 26: adhesive tape
- 28: second element
- 30: angle
- 32: hinge
- 33: movement
- 34: shaft
- 36: hub
- 38: snap-fit connection
- 39: form-fit connection
- 40: fastening element
- 42: screw
- 44: oblong hole
- 46: second camera
- 48: lens axis
- 50: normal lens camera
- 52: first field of view
- 54: wide lens camera
- 56: second field of view
- 58: vehicle

## Claims

1. Camera module (10) for being mounted on a window (12) and comprising:
at least a first camera (14) comprising a lens axis (16),
a first element (18) for being fixed to the window (12) and defining a mounting plane (20) between the first element (18) and the window (12) in a fixed condition,
a fixing element (22) for fixing the first element (18) to the window (12),
a second element (28), wherein the first camera (14) is fixed to the second element (28),
**characterized in**
**that** the second element (28) is movable relative to the first element (18) such that an angle (30) between the lens axis (16) and the mounting plane (20) is adjustable.

2. Camera module (10) according to claim 1,
wherein the angle (30) between the lens axis (16) and the mounting plane (20) is adjustable in a range smaller than 50°, preferably smaller than 30°.

3. Camera module (10) according to one of the preceding claims,
wherein the angle (30) between the lens axis (16) and the mounting plane (20) is adjustable down to a lower limit, wherein the lower limit is above 30°, preferably above 60°, preferably essentially 70°.

4. Camera module (10) according to one of the preceding claims,
wherein the angle (30) between the lens axis (16) and the mounting plane (20) is adjustable up to an upper limit, wherein the upper limit is below 120°, preferably below 100°, preferably essentially 90°.

5. Camera module (10) according to one of the preceding claims,
wherein the camera module (10) comprises a fastening element (40) for fastening the second element (28) relative to the first element (18).

6. Camera module (10) according to claim 5,
wherein the fastening element (40) is a screw (42).

7. Camera module (10) according to one of the preceding claims,
wherein the camera module (10) comprises a hinge (32) defining a movement (33) of the second element (28) relative to the first element (18).

8. Camera module (10) according to claim 7,
wherein the hinge (32) comprises a shaft (34) and a hub (36), wherein the shaft (34) is held by the hub (36) by means of a snap-fit connection (38) and/or a form-fit connection (39).

9. Camera module (10) according to one of the preceding claims,
wherein the first element (18), the second element (28) and/or the hinge (32) are made from plastic.

10. Camera module (10) according to one of the preceding claims,
wherein the fixing element (22) is an adhesive element (24), preferably an adhesive tape (26).

11. Camera module (10) according to one of the preceding claims,
wherein the camera module (10) comprises a second camera (46) fixed to the second element (28).

12. Camera module (10) according to one of the preceding claims,
wherein the first camera (14) is a normal lens camera (50) and/or wherein the second camera (46) is a wide lens camera (54).

13. Vehicle (58) comprising
a window (12) and
a camera module (10) mounted on the window (12), wherein the camera module (10) is configured in accordance with one of the preceding claims.
